# EUROPÄISCHE PATENTSCHRIFT

(11) **EP 3 467 450 B1**
(45) Veröffentlichungstag und Bekanntmachung des Hinweises auf die Patenterteilung: **09.12.2020**
(21) Anmeldenummer: 17195233.6
(22) Anmeldetag: 06.10.2017
(51) Int. Cl.: G01S 7/03, G01S 7/35, G01S 13/42, G01S 13/88, G01F 23/284, G01F 22/00

(54) **RADARFÜLLSTANDMESSGERÄT MIT EINEM RADARSYSTEM ON CHIP**
RADAR FILL LEVEL MEASURING DEVICE WITH A RADAR SYSTEM ON CHIP
APPAREIL DE MESURE DE NIVEAU DE REMPLISSAGE À RADAR POURVU D'UN SYSTÈME RADAR SUR PUCE

(43) Veröffentlichungstag der Anmeldung: 10.04.2019
(73) Patentinhaber: VEGA Grieshaber KG, 77709 Wolfach (DE)
(72) Erfinder: WELLE, Roland, 77756 Hausach (DE); WÄLDE, Steffen, 78078 Niedereschach (DE)
(74) Vertreter: Maiwald Patent- und Rechtsanwaltsgesellschaft mbH

(56) Entgegenhaltungen:
- EP-A1- 3 171 138
- WO-A1-02/31450
- WO-A1-2010/144936
- US-A1- 2002 020 216
- US-A1- 2004 119 636
- US-A1- 2015 253 176

## Beschreibung

### Gebiet der Erfindung

Die Erfindung betrifft die Füllstandmessung und die Erfassung der Topologie einer Füllgutoberfläche in einem Behälter. Insbesondere betrifft die Erfindung ein Radarfüllstandmessgerät zur Füllstandmessung und/oder zur Erfassung der Topologie einer Füllgutoberfläche in einem Behälter.

### Hintergrund

Zur Füllstandmessung und zur Erfassung der Topologie einer Füllgutoberfläche werden heute Radarfüllstandmessgeräte verwendet. Im Gegensatz zu vielen anderen Bereichen wurde der Durchbruch für die Radartechnik in der Füllstandmessung erst möglich, nachdem extrem kleine Reflexionssignale von der Elektronik der Messgeräte erfasst und verarbeitet werden konnten.

Moderne Füllstandmessgeräte und Topologiemessgeräte, die in der Lage sind, die genaue Form der Oberfläche eines Füllguts zu erfassen, zeichnen sich nicht nur durch eine hohe Sendefrequenz, die typischerweise im Gigahertzbereich, beispielsweise im Bereich von 75 GHz bis 85 GHz liegt, aus, sondern sind auch in der Lage, Amplitudenunterschiede des reflektierten Signals in einem Bereich bis zu 100 dB oder mehr sicher zu verarbeiten.

Zur Erzeugung und Verarbeitung der hochfrequenten Sendesignale im Bereich von 79 GHz kann ein monolithisch aufgebauter integrierter Mikrowellenschaltkreis (MMIC) vorgesehen sein. Dieser Baustein kann eine Vielzahl an Sende- und Empfangskanälen aufweisen, die in dieser Anmeldung auch als Radarkanäle bezeichnet werden, so dass die Füllgutoberfläche abgescannt werden kann.

Je genauer die Füllgutoberfläche abgescannt werden soll, desto mehr Sende- und Empfangskanäle sind erforderlich, um eine hochqualitative Abbildung zu erzielen, was mit entsprechend hohem Hardwareaufwand und Energiebedarf einhergeht.

US 2004/0119636 A1 beschreibt ein Verfahren und eine Vorrichtung zur Radar basierten Füllstandmessung. Die Elektronik des Füllstandradars weist eine 2-Dimensionale Array Antenne auf, die durch zwei Butler Matrixen gespeist wird. WO02/31450 A1 beschreibt ein Füllstandmessgerät, dass mit einer einzigen möglichst einfach aufgebauten Antenne rauskommt und bei dem ein zur Messung erforderlicher Mindestabstand des Füllgutes zur Antenne möglichst gering ist, mit einem Mikrowellengenerator, und einer Antenne mit planarer Antennenstruktur, die dazu dient, die Mikrowellen in Richtung des Füllgutes zu senden und an einer Füllgutoberfläche reflektierte Mikrowellen zu empfangen, bei der die planare Antennenstruktur mindestens zwei Sende- und/oder Empfangselemente aufweist.

### Zusammenfassung der Erfindung

Es ist eine Aufgabe der Erfindung, ein Radarfüllstandmessgerät zum Messen eines Füllstands eines Mediums oder der Topologie eines Mediums in einem Behälter bereitzustellen.

Diese Aufgabe wird durch den Gegenstand des unabhängigen Patentanspruchs gelöst. Weiterbildungen der Erfindung ergeben sich aus den Unteransprüchen und der folgenden Beschreibung.

Ein erster Aspekt betrifft ein Radarfüllstandmessgerät, das zur Messung eines Füllstands eines Mediums in oder außerhalb eines Behälters und/oder zur Erfassung der Topologie einer Füllgutoberfläche in oder außerhalb eines Behälters eingerichtet ist. Das Radarfüllstandmessgerät weist eine Anordnung auf, die einen oder mehrere Radarchips aufweist. Bei einem solchen Radarchip kann es sich insbesondere um ein hochintegriertes Radarsystem on Chip (RSoC) handeln, das mehrere Sende- und/oder Empfangskanäle aufweist. Die Anordnung mit dem einen oder den mehreren Radarchips weist einen oder mehrere Sendekanäle zum Abstrahlen jeweils eines Sendesignals in Richtung der Füllgutoberfläche und einen oder mehrere Empfangskanäle zum Empfangen der an der Füllgutoberfläche reflektierten Sendesignale auf. Einer oder mehrere der Sendekanäle kann auch als kombinierter Sende-Empfangskanal ausgeführt sein. Die Radarchips können insbesondere integrierte Mikrowellenschaltkreise sein, welche auch als Radarsystem on Chip bezeichnet werden können. Ein solches Radarsystem on Chip (RSoC) ist ein hochintegrierter Mikrowellenschaltkreis mit Schaltungskomponenten für digitale Funktionen, welches, gemäß einer Ausführungsform, in der Lage ist, die komplette Funktionalität eines herkömmlichen Radarsystems für die Signalerzeugung, die Signalverarbeitung und die Überführung der Empfangssignale, also der reflektierten Sendesignale, in eine digitale Darstellung auf einem einzigen Radarchip zu integrieren.

Jeder der Sendekanäle kann eingerichtet sein, ein hochfrequentes Sendesignal mit einer Frequenz im Gigahertzbereich zu erzeugen, beispielsweise im Bereich von 75 GHz bis 85 GHz oder darüber.

Die verschiedenen Bauteile der Anordnung, also insbesondere die Radarchips, können sich gegenseitig synchronisieren. Beispielsweise ist ein Masterchip vorgesehen, der ein Synchronisationssignal an die anderen Chips abgibt. Dies erfolgt über eine Hochfrequenzleitungsanordnung, die die verschiedenen Chips miteinander verbindet. Gemäß einer Ausführungsform weist die Hochfrequenzleitungsanordnung einen Hohlleiter auf, um Leitungsverluste zu reduzieren.

Es ist eine Antennenanordnung vorgesehen, die eine Mehrzahl an Sendeelementen und Empfangselementen aufweist. Das Radarfüllstandmessgerät weist mehr Sendekanäle auf als Sendeelemente vorgesehen sind und/oder mehr Empfangskanäle als Empfangselemente vorgesehen sind.

Es kann vorgesehen sein, dass die Antennenandordnung zumindest zwei Sendeelemente (109-112) und/oder zumindest zwei Empfangselemente (113-119) aufweist.

Es ist ein Füllstandmessgerät zur Füllstand- und/oder Topologieerfassung angegeben, welches zumindest einen hochintegrierten Radarchip aufweist, dessen Sendeelemente nur zum Teil zur Messung verwendet werden und/oder dessen Empfangselemente nur zum Teil zur Messung verwendet werden.

Gemäß einer weiteren Ausführungsform ist das Radarfüllstandmessgerät eingerichtet, weniger Sendeelemente zur Füllstandmessung zu verwenden als Sendekanäle vorgesehen sind und/oder weniger Empfangselemente zur Füllstandmessung zu verwenden als Empfangskanäle vorgesehen sind.

Gemäß einer weiteren Ausführungsform weist die Anordnung mit einem oder mehreren Radarchips eine Mehrzahl an Radarchips auf, beispielsweise mehr als vier Radarchips.

Gemäß einer weiteren Ausführungsform weist die Anordnung mit einem oder mehreren Radarchips einen Radarchip auf, der zum Senden und zum Empfangen von Sendesignalen ausgeführt ist, und einen integrierten Mikrowellenschaltkreis, der nur zum Senden von Sendesignalen oder nur zum Empfangen von an der Füllgutoberfläche reflektierten Sendesignalen eingerichtet ist.

Erfindungsgemäß weist das Radarfüllstandmessgerät eine Steuerschaltung auf, die eingerichtet ist zur Aktivierung eines von zwei Betriebszuständen des Radarfüllstandmessgeräts, wobei in den beiden Betriebszuständen jeweils eine andere Anzahl an Sendekanälen und/oder Empfangskanälen verwendet wird.

Gemäß einer weiteren Ausführungsform ist die Steuerschaltung eingerichtet, den Betriebszustand in Abhängigkeit vom Füllstand zu aktivieren oder zu deaktivieren.

Gemäß einer weiteren Ausführungsform ist die Steuerschaltung eingerichtet, den Betriebszustand in Abhängigkeit von der Amplitude der empfangenen Signale zu aktivieren oder zu deaktivieren.

Gemäß einer weiteren Ausführungsform ist die Steuerschaltung eingerichtet, ein Bauteil der Anordnung mit dem einen oder mehreren Radarchips für die Füllstandmessung zu deaktivieren, beispielsweise in Abhängigkeit vom vorher gemessenen Füllstand.

Gemäß einer weiteren Ausführungsform ist auf zumindest einem oder allen Radarchips der Anordnung ein Analog/Digitalwandler integriert, eingerichtet zum Umwandeln des reflektierten Sendesignals in ein digitalisiertes Zwischenfrequenzsignal, welches auf ein oder mehrere an der Füllgutoberfläche reflektierte Sendesignale zurückzuführen ist.

Gemäß einer weiteren Ausführungsform weisen zumindest zwei Sendekanäle jeweils eine Antenne auf, die daran angeschlossen ist.

Ebenso weisen zumindest zwei der Empfangskanäle eine Antenne auf, die daran angeschlossen ist.

Gemäß einer weiteren Ausführungsform ist das Radarfüllstandmessgerät als FMCW-Radarfüllstandmessgerät ausgeführt, das ein frequenzmoduliertes Dauerstrichsignal zur Messung verwendet, wobei jeder Messzyklus einen Frequenzsweep umfasst, der beispielsweise eine Startfrequenz von 75 GHz aufweist und eine Maximalfrequenz von 85 GHz.

Gemäß einer weiteren Ausführungsform ist das Radarfüllstandmessgerät zur Erfassung der Topologie eines Mediums in einem Behälter eingerichtet.

Gemäß einer weiteren Ausführungsform basiert einer oder jeder Radarchip der Anordnung auf BiCMOS-Technologie. Gemäß einer weiteren Ausführungsform der Erfindung basieren die Radarchips auf SiGe-Technologie. Gemäß einer weiteren Ausführungsform der Erfindung basieren die Radarchips auf HF-CMOS-Technologie und weisen Hochfrequenzschaltungsteile für Frequenzen von 75 GHz und darüber auf.

Im Folgenden werden mit Verweis auf die Figuren Ausführungsformen beschrieben. Werden in der folgenden Figurenbeschreibung dieselben Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt einen Messaufbau gemäß einer Ausführungsform.
Fig. 2 zeigt ein Radarfüllstandmessgerät gemäß einer Ausführungsform.
Fig. 3 zeigt ein Radarfüllstandmessgerät gemäß einer Ausführungsform.
Fig. 4 zeigt ein Radarfüllstandmessgerät gemäß einer Ausführungsform.
Fig. 5 zeigt eine Anwendung in einem hohen, schlanken Silo.
Fig. 6 zeigt ein Radarfüllstandmessgerät gemäß einer Ausführungsform.
Fig. 7 zeigt ein Radarfüllstandmessgerät gemäß einer Ausführungsform.
Fig. 8 zeigt ein Radarfüllstandmessgerät gemäß einer Ausführungsform.
Fig. 9A bis 9D zeigen Ablaufdiagramme eines Verfahrens gemäß einer Ausführungsform.

### Detaillierte Beschreibung von Ausführungsformen

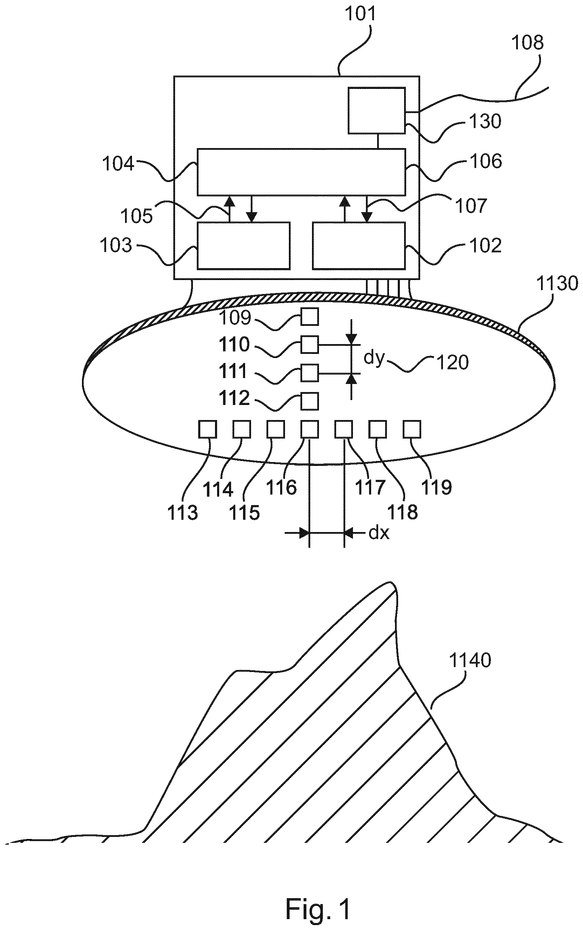

Fig. 1 zeigt ein Radarfüllstandmessgerät 101, das in einem Behälter installiert ist, um die Topologie der Oberfläche eines Füllguts in dem Behälter zu erfassen.

Das Radarfüllstandmessgerät weist einen oder mehrere hochintegrierte Radarchips (RSoCs, Radar System on Chips) 102, 103 auf, die mehrere Sender und Empfänger aufweisen. Diese können auch in Bereichen wie Fahrerassistenzsystemen, Verkehrsüberwachung, Objektüberwachung in Industriebetrieben, Drohnen und vielen weiteren Bereichen eingesetzt werden. Ein Vorteil von mehrkanaligen Radarchips ist es, dass eine Art von Strahlformung durchgeführt werden kann.

Manche Füllstandmessgeräte weisen zur Erzeugung und Verarbeitung hochfrequenter Signale im Bereich von 79 GHz einen oder auch mehrere monolithisch aufgebaute integrierte Mikrowellenschaltkreise (MMIC's) auf. Speziell im Bereich zwischen 76 GHz bis 81 GHz können Bausteine (RSOC) verwendet werden, die eine Alternative zu den bislang verwendeten MMIC's darstellen. Um die Bausteinvielfalt klein zu halten, können die RSOC's in einer vorab definierten, preisgünstigen Standardkonfiguration mit N Sendeelementen und M Empfangselementen entwickelt und in hohen Stückzahlen produziert werden. Trotzdem sollte eine hohe Variabilität in Bezug auf die Anzahl an Sende- und Empfangskanälen in realen Anwendungen ermöglicht werden.

Die Anmeldung schlägt ein Füllstandmessgerät zur Messung von Füllstand und/oder der Topologie einer Füllgutoberfläche vor unter Verwendung von K Sendeantennen und L Empfangsantennen. Das Gerät weist beispielsweise zumindest einen hoch integrierten Radarchip mit N Sendeelementen und M Empfangselementen auf, wobei die Anzahl N an Sendeelementen > Anzahl K der zur Messung verwendeten Sendeantennen und/oder wobei die Anzahl M an Empfangselementen > Anzahl L an Empfangsantennen ist.

In einer alternativen Ausgestaltung kann vorgesehen sein, dass die Anzahl K an Sendeantennen größer oder gleich zwei ist. Zusätzlich oder alternativ kann vorgesehen sein, das die Anzahl L an Empfangsantennen größer oder gleich zwei ist.

Die Topologie erfassende Füllstandmessgeräte führen in vielen Bereichen der Schüttgutmessung zu deutlich verbesserten Messergebnissen, und werden daher in zunehmendem Maße zur sicheren und genauen Überwachung von Schüttgütern verwendet. Durch die Entwicklung hoch integrierter Radarchips (RSOC) kann der Systemaufbau abbildender Radarsensoren im Bereich der Füllstandmessung vereinfacht und preisgünstig gestaltet werden.

Beispielsweise weisen die RSOC's drei voneinander unabhängige Sendekanäle und vier voneinander unabhängige Empfangskanäle auf. Es zeigt sich nun, dass es für die Realisierung eines Füllstandmessgerätes vorteilhaft sein kann, nicht alle diese Kanäle für die eigentliche Messung zu nutzen.

Das Messgerät 101 weist zumindest einen hoch integrierten Radarchip 102, 103 auf, welcher mit zumindest einer Auswerteeinheit 104 über zumindest eine digitale Schnittstelle 105 verbunden ist. Zumindest eine Steuereinheit 106, die als Steuerschaltung oder Prozessor ausgeführt sein kann, kann über zumindest eine digitale Signalleitung 107 den Betriebsablauf und die Konfiguration des Radarchips 102, 103 beeinflussen. Die zumindest eine Auswerteeinheit 106 kann eingerichtet sein, zumindest einen der Messwerte Füllstand, Topologie, Volumen, oder daraus abgeleitete Werte zu ermitteln und nach außen hin in digitaler und/oder analoger Weise nach bestimmten Verfahren bereitzustellen. Eine übliche Vorgehensweise sieht vor, den Messwert mit Hilfe einer Netzteilvorrichtung 130 in Form eines dem Messwert proportionalen 4..20mA Stromwertes 108 bereitzustellen. Die von den Radarchips 102, 103 erzeugten Hochfrequenzsignale werden über die Sendeelemente 109, 110, 111, 112 der Antennenanordnung 1130 in Richtung einer Füllgutoberfläche 1140 abgestrahlt. Die an der Oberfläche 114 reflektierten Signale gelangen nach einer von der Entfernung abhängigen Laufzeit zurück zur Antennenanordnung 1130, und werden von den Empfangselementen 113 bis 119 empfangen und an die Empfangsschaltungen der Radarchips 102, 103 weitergeleitet.

Innerhalb der Radarchips werden die Signale verarbeitet, und als digitales Echosignal an einer externen Schnittstelle 105 bereitgestellt. Im vorliegenden Beispiel der Antennenanordnung 1130 sind die Sendeelemente 109 bis112 und die Empfangselemente 113 bis 119 jeweils in einem Abstand dx = dy kleiner gleich der halben Wellenlänge der in Richtung der Oberfläche abgestrahlten Hochfrequenzsignale voneinander angeordnet.

Es sei darauf hingewiesen, dass sowohl die Anordnung der Antennenelemente als auch der Abstand derselben zueinander in unterschiedlichen Varianten realisiert sein kann. Die vorliegende Anordnung und insbesondere die Nummerierung der Sendeelemente 109 bis112 und der Empfangselemente 113 bis 119 soll im weiteren Verlauf der Schrift aber als praxisrelevante Ausgestaltung herangezogen werden, um einen Aspekt zu erläutern.

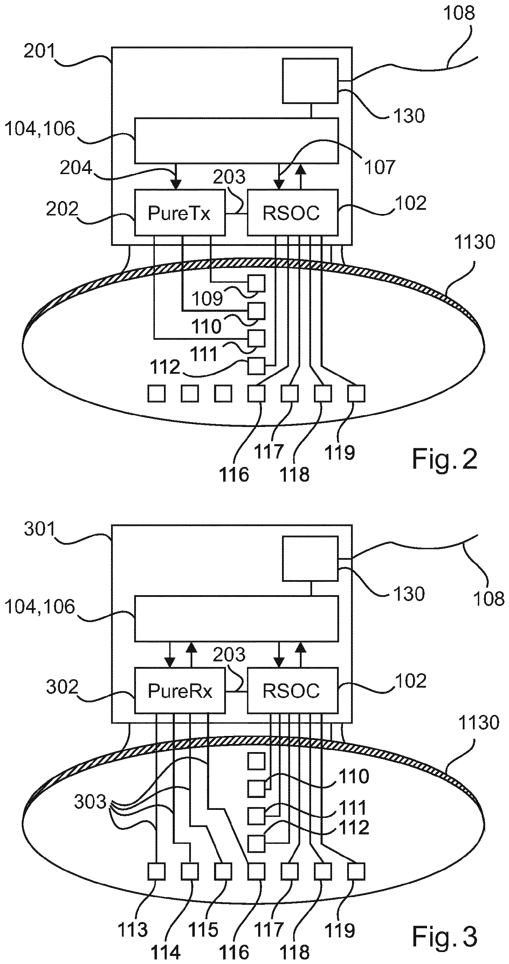

Figur 2 zeigt eine Ausführungsform. Die Pinbelegung für die Position der Sende- und Empfangskanäle an einem RSOC 102 sind vom Hersteller des Bausteins vorab definiert, und passen nur in den wenigsten Fällen zu den vom Systemdesigner geforderten Positionen der Sendeelemente 109 bis 112 und der Empfangselemente 113 bis 119. Da gleichzeitig zu beachten ist, dass die entsprechenden Verbindungsleitungen zwischen dem Chip 102 und den Antennenelementen 109 bis 112 und 116 bis 119 hochfrequenztechnisch optimiert sein sollten (geringe Leitungslängen, keine Überkreuzungen, möglichst kein Lagenwechsel auf der Platine), ergibt sich beim praktischen Aufbau eines Radargerätes 201 oftmals das Problem, dass die gewünschte Anzahl und Position der Antennen nicht optimal mit entsprechenden RSOC's verbunden werden kann. Es kann daher vorgesehen sein, das Problem durch die Kombination zumindest eines RSOC 102 mit zumindest einem reinen TX-MMIC 202 zu lösen.

Das RSOC 102 kann über entsprechende Verbindungleitungen 203 die Hochfrequenzsignalerzeugung innerhalb des RX-MMIC mit derer innerhalb des RSOC synchronisieren, so dass die über die Antennen 109 bis 111 abgestrahlten Signale nach Reflektion am Füllgut wieder von den Antennen 116 bis 119 empfangen und vom RSOC 102 in entsprechende Echosignale umgesetzt werden können.

Durch den Einsatz eines reinen TX-MMIC 202 ergeben sich deutliche Freiheitsgrade beim Layout entsprechender Hochfrequenzschaltungen. Es kann vorgesehen sein, nicht alle Kanäle eines TX-Bausteins für die Messung zu verwenden. Über entsprechende Steuersignale 204 kann eine Deaktivierung der entsprechenden Schaltungsstufen vorgenommen werden, was zu einer geringeren Leistungsaufnahme und geringeren Erwärmung des Messgerätes 201 beitragen kann. Erfindungsgemäß ist es vorgesehen, nicht alle TX-Schaltungskanäle einer RSOC 102 mit entsprechenden Antennenelementen 109 bis 112 zu verbinden.

Eine Deaktivierung der entsprechenden Elemente über ein Steuersignal 107 kann vorgesehen sein. Es kann zudem vorgesehen sein, innerhalb der Steuerungs- und/oder Auswerteschaltung 104, 106 einen Betriebsablauf für das RSOC zu implementieren, welcher zu einer energieoptimierten und zeitoptimierten Messung unter Auslassung einer Ansteuerung und/oder Auswertung der nicht mit Antennenelementen verbundenen Kanäle führt. Es kann vorgesehen sein, den TX-MMIC 202 mit Hilfe eines RSOC 102 zu realisieren, bei welchem alle für den Empfang von Signalen vorgesehenen Baugruppen während einer Initialisierungsphase deaktiviert werden.

Figur 3 zeigt eine weitere Ausgestaltung eines Füllstandradargeräts 301. Das System besteht wiederum aus einem integrierten RSOC 102, welches im vorliegenden Beispiel mit einem reinen Rx-MMIC 302 verbunden wird. Das RX-MMIC ermöglicht einen vereinfachten Systemaufbau, durch entsprechende Positionierung des RX-Bausteins 302 können insbesondere die Hochfrequenzsignalleitungen 303 möglichst kurz ausgestaltet werden. Der RX-Baustein erhält vom Master Chip 102 über zumindest eine Verbindungsleitung 203 entsprechende Synchronisationssignale, welche ihn in die Lage versetzten, die vom RSOC 102 erzeugten und über die Antenne 1130 abgestrahlten Signale zu empfangen, und in eine digitale Darstellung umzusetzen. Es kann vorgesehen sein, dass dieses Empfangen und Umsetzen in einem Chip 302 erfolgt. Es kann auch vorgesehen sein, mehrere Chips zu verwenden, beispielsweise einen Empfangs-MMIC in Verbindung mit zumindest einem externen Analog-Digital-Wandler.

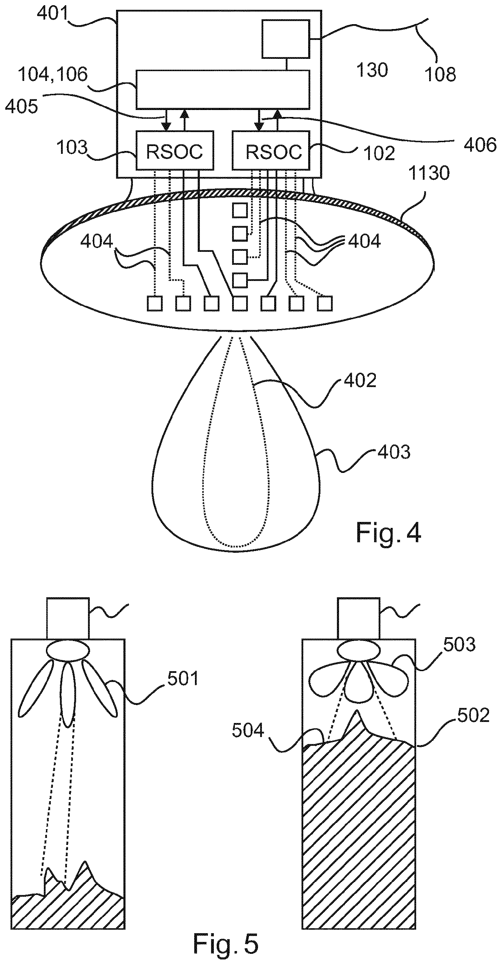

Figur 4 zeigt eine weitere, besonders vorteilhafte Ausgestaltung eines Füllstandradargeräts 401. Das Messgerät besteht hardwareseitig aus den gleichen Komponenten wie das Gerät 101 aus Figur 1, weist aber einen in der Steuerungs- und Auswerteschaltung 104, 106 veränderten Betriebsablauf des Gesamtsystems 401 auf. Die Sendeelemente 109 bis 112 sind hardwaremäßig mit den RSOC's 102, 103 verbunden. Ebenso sind die Empfangselemente 113 bis 119 mit den entsprechenden Eingängen der RSOC's 102, 103 fest verbunden.

In einer ersten Betriebsphase des Messgerätes 401 werden alle Sendeelemente 109 bis 112 nacheinander oder parallel mit geeigneten Sendesignalen versorgt. Gleichzeitig mit der Aussendung von Signalen über die Elemente 109 bis 112 werden die am Füllgut 114 reflektierten Signale von den Empfangselementen 113 bis 119 empfangen, digitalisiert und an die Auswerteschaltung 106 weitergeleitet. Innerhalb der Auswerteschaltung kann eine digitale Strahlformung vorgesehen sein, welche einen Teil oder auch alle der von den Elementen 113 bis 119 empfangenen Signale nutzt, um die Reflexionsverhältnisse in eine vorgebbare Richtung zu bestimmen. In diesem Betriebsmodus lässt sich eine sehr enge Fokussierung 402, 501 der resultierenden Antennenkeulen im Sensor erreichen.

Figur 5 zeigt eine entsprechende Anwendung in einem hohen, schlanken Silo. Nachteilig an diesem Betriebsmodus sind der immense Rechenaufwand durch die Vielzahl an Daten und der hohe Energiebedarf, bedingt durch die Vielzahl an Sende- und Empfangskanälen, welche für die Erfassung von Daten herangezogen werden. Das Messgerät kann deshalb in Abhängigkeit von bestimmten Ereignissen und Bedingungen (z.B. Füllhöhe, Behälterform, Oberflächenform, Elektronik- und Umbebungstemperatur, Zulassungsbedingungen im Inbetriebnahmeland) vorgesehen sein, seinen Betriebsmodus vollautomatisch zu verändern.

Figur 4 zeigt den Signalfluss für einen zweiten Betriebsablauf. Aufbauend auf dem Ergebnis einer vorangegangenen Messung der Füllhöhe 502 im Behälter kann das Messgerät bestimmen, dass eine breitere Fokussierung der resultierenden Antennenkeule 403, 503 hinreichend ist, um die Oberfläche 114, 504 eines Füllgutes in der gewünschten Qualität zu vermessen. Es verändert daher den Betriebsablauf derart, dass das Messgerät eine neuerliche Messung nur noch unter Verwendung einer Teilmenge der Sendeelemente 109 bis 112 und/oder der Empfangselemente 113 bis 119 durchführt. Im vorliegenden Beispiel werden die gestrichelt gezeichneten Signalpfade 404 für die Messung im zweiten Betriebsablauf nicht mehr verwendet. Dies führt zu einer Einsparung an Energie, Mess- und Rechenzeit zur Auswertung der Signale. Das Deaktivieren von Sende- und/oder Empfangskanälen kann im Allgemeinen durch entsprechende Steuersignale 405, 406 erreicht werden. In einer besonders vorteilhaften Ausgestaltung kann die Auswertelogik auch das Einlesen der Signale nicht aktivierter Empfangselemente 113, 114, 118, 119 aussetzen, was zu einer weiteren Beschleunigung des Betriebsmodus beitragen kann.

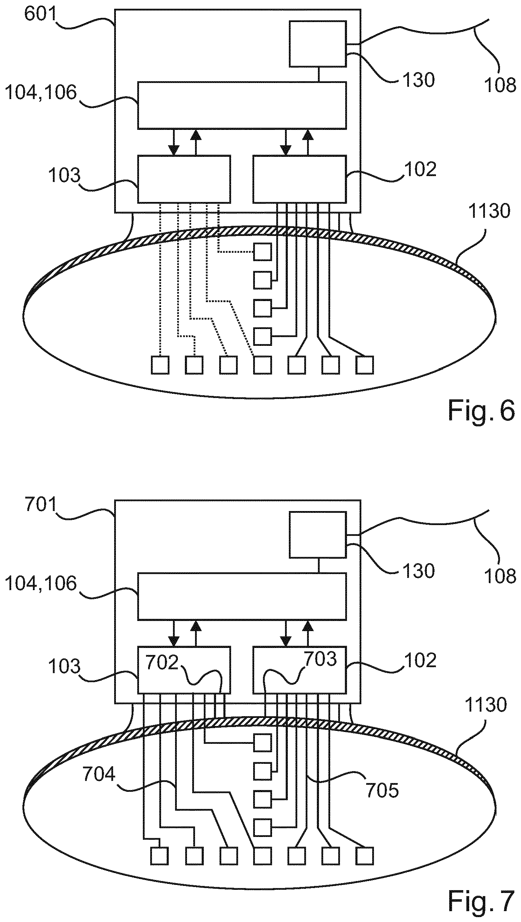

Figur 6 zeigt eine weiteres Füllstandradargerät. Das Messgerät 601 weist wiederum zwei Betriebsmodi auf, welche in Abhängigkeit äußerer Einflüsse automatisiert aktiviert werden können. Das vorliegende Beispiel zeigt eine Reaktion auf ein verändertes Energiebudget und/oder auf veränderte Temperaturbedingungen. Während in einem Zustand hinreichend guter Energieversorgung das Messgerät 601 einen Betriebsmodus gemäß der Vorrichtung 101 realisieren kann, kann bei Verringerung des Energiebudgets und/oder bei Erreichen einer oberen Grenztemperatur das Gerät vollautomatisch in einen zweiten Betriebsmodus wechseln, in welchem nur noch eine reduzierte Anzahl an RSOC's für die Messung verwendet wird. Während im ersten Betriebsmodus beide Radarchips 102, 103 und somit eine Vielzahl an Sendeelementen oder -antennen 109 bis 112 und Empfangselementen 113 bis 119 zur Erfassung einer Vielzahl an Echokurven verwendet werden, deaktiviert in einem zweiten Betriebsmodus die Steuervorrichtung 104 den zweiten RSOC 103. Die Messung erfolgt dann ausschließlich mit dem ersten RSOC 102 und den Antennenelementen 110 bis 112, 117 bis 119.

Der Energieverbrauch des Systems reduziert sich dadurch deutlich. Es kann auch vorgesehen sein, in einem dritten Betriebsmodus die Radarchips 102, 103 mit den jeweils damit verbundenen Sende- und Empfangselementen in aufeinanderfolgenden Messzyklen alternierend anzusteuern. Durch diese Maßnahme kann die Erwärmung der Elektronik gezielt kontrolliert und beeinflusst werden. Die Auswerteschaltung 106 kommuniziert mit der Ansteuerschaltung 104, um in Abhängigkeit vom gewählten Betriebsmode die Auswertung der Signale in geeigneter Weise zu optimieren und anzupassen.

Figur 7 verdeutlicht nochmals eine besonders vorteilhafte Ausgestaltung eines Füllstandradargeräts oder Sensors 701. Der Sensor weist zwei Standard-RSOC's 102, 103 mit je drei Sendekanälen und je vier Empfangskanälen auf. Die Verwendung dieser in hohen Stückzahlen produzierten Standard-IC's ermöglicht den preisgünstigen Aufbau eines Füllstandmessgerätes 701. Im Hinblick auf eine nach Systemgesichtspunkten optimierten Antennenvorrichtung 1130 kann vorgesehen sein, eine erste Teilmenge der Sende- und/oder Empfangskanäle 704, 705 mit den Sende- und Empfangsvorrichtungen der Antennenvorrichtung 1130 zu verbinden. Die Steuervorrichtung 104, 106 ist eingerichtet, die nicht genutzten Sende- und/oder Empfangskanäle 702, 703 der Radarchips 102, 103 zu deaktivieren, d.h. in einen energieoptimierten Zustand zu überführen. Die Auswertevorrichtung 106 ist eingerichtet, nur einen Teil der von den Radarchips 702, 703 bereitgestellten Daten zu empfangen und/oder nur einen Teil der Signale zu verarbeiten. Die Steuervorrichtung 104 ist eingerichtet, nur einen Teil der in den Radarchips aktivierbaren Sendekanäle während eines Messzyklus zu aktivieren. Durch diese Maßnahme kann Energie eingespart werden.

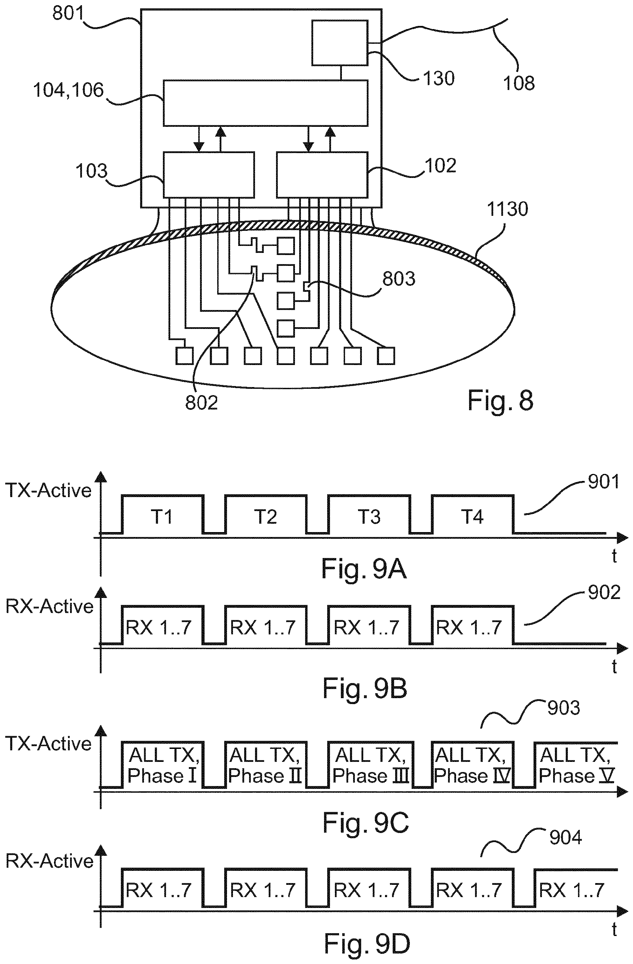

Figur 8 zeigt eine weitergehende Ausgestaltung. Das Gerät 801 zeichnet sich wiederum durch die Fähigkeit zum Wechsel des Betriebs- und Auswertemodus während der Laufzeit aus. Es ist vorgesehen, die Sendeelemente 109 bis 112 mit einem Abstand dy 120 von kleiner gleich der halben Wellenlänge des abgestrahlten Hochfrequenzsignals zu positionieren. Es kann ferner vorgesehen sein, die Laufzeit des Hochfrequenzsignals von den Radarchips 102, 103 zu den Sendeelementen 109 bis 112 durch das Einfügen entsprechender Kompensationsstrukturen 802, 803 für alle Sendekanäle im Wesentlichen gleich groß zu machen. Es wird auf diese Art und Weise möglich, das Messgerät 801 in einem zweiten Betriebsmodus als Echtzeitstrahlformer im Sendebetrieb mit analoger Strahlformung als sogenanntes Phased Array zu betreiben. Empfangsseitig wird dann lediglich ein eindimensionales digitales Strahlformen notwendig.

In einem ersten Betriebsmodus kann vorgesehen sein, das gleiche Messgerät 801 mit einer volldigitalen Strahlformung zu betreiben. Die Figuren 9A bis 9D zeigen eine Ansteuersequenz für die beiden Betriebsmodi. Die Diagramme 901 und 902 der Figuren 9A und 9B verdeutlichen den ersten Betriebsmodus mit einer volldigitalen Strahlformung in der Auswerteeinheit 106. Die Steuereinheit 104 aktiviert zunächst den ersten Sendekanal des Radarchips 103. Das von der Sendeeinheit 109 abgestrahlte Signal wird von den zeitgleich betriebenen Empfangskanälen der Radarchips, welche mit den Elementen 113 bis 119 verbunden sind, empfangen und in digitaler Form an den Auswertechip weitergeleitet. In einer daran anschließenden Phase wird der zweite Sendekanal im Radarchip 103 aktiviert. Die zeitgleich empfangenen Signale werden wiederum an die Auswerteeinheit 106 weitergeleitet und gespeichert. In einer dritten Phase wird das Sendeelement 111 vom zweiten Radarchip 102 mit Sendesignalen beaufschlagt. Die Messdatenerfassung endet nach Durchlaufen aller für die Messung genutzten Sendekanäle. Nach Deaktivierung aller Radarchips führt die Auswerteeinheit 106 ein Verfahren zur digitalen Strahlformung in zwei Dimensionen unter Verwendung derjenigen Echosignale aus, welche mit tatsächlich verwendeten Sende- und Empfangselementen in Verbindung stehen. Das Verfahren hat den Vorteil, dass innerhalb der Auswertung nun beliebige Echokurven für vorgebbare Winkelrichtungen digital synthetisiert werden können. Nachteilig ist der hohe Rechenaufwand und die lange Messzeit.

Es kann daher vorgesehen sein, in einem zweiten Betriebsmodus ein analoges Sendebeamforming durchzuführen. Die Ablaufdiagramme 903, 904 der Figuren 9C und 9D verdeutlichen die dazu notwenigen Ansteuersequenzen. Der Betriebsmodus wird dadurch gekennzeichnet, dass im Gegensatz zum zuvor genannten Ablauf zumindest zwei oder vorteilhafterweise alle mit Sendeelementen verbundenen TX-Kanäle der Radarchips 102, 103 gleichzeitig aktiviert werden. Mit Hilfe der in den Radarchips vorhandenen Phasenschieber kann gezielt ein Phasenversatz der Sendesignale untereinander eingestellt werden, wodurch sich das resultierende Sendesignal in einer vorab definierten Raumrichtung zu einem Maximum überlagert (analoges Beamforming). Um mehrere Raumrichtungen zu erfassen, wird der Phasenversatz zwischen den Sendekanälen in aufeinanderfolgenden Messzyklen variiert. Das Verfahren kann in Abhängigkeit von dem Bereich an Raumrichtungen, welcher erfasst werden soll, zeitlich ausgedehnt oder auch verkürzt werden. Während aller Sendephasen sind die mit den Empfangselementen 113 bis 119 verbundenen Empfangsstufen der Radarchips 102, 103 aktiviert, und übermitteln die erfassten Daten an die Auswerteeinheit. Die Auswerteeinheit 106 führt unter Berücksichtigung der aktuell eingestellten Phasenvorgaben für die Sendesignale ein eindimensionales digitales Strahlformen für die Empfangssignale aus, wodurch ein Strahlformen in eine Winkelrichtung erfolgt, welche im Wesentlichen senkrecht zur Winkelrichtung der Strahlformung durch das Sendebeamforming ist.

Es kann vorgesehen sein, an Stelle oder ergänzend zu den Kompensationsstrukturen 802, 803 einen durch Werkskalibration erfassten Wert für eine Kalibrierphase innerhalb der Ansteuerschaltung 104 zu berücksichtigen. Es kann auch vorgesehen sei, Amplitudenunterschiede zwischen den Sendesignalen durch ein entsprechendes Einstellen der Sendeverstärker innerhalb der Radarchips 102, 103 zu kompensieren.

## Patentansprüche

1. Radarfüllstandmessgerät (101) zur Füllstandmessung oder zur Erfassung der Topologie einer Füllgutoberfläche in einem Behälter, aufweisend:
eine Anordnung (102, 103, 202) mit einem oder mehreren Radarchips (102, 103), aufweisend eine Mehrzahl an Sendekanälen zum Erzeugen jeweils eines Sendesignals und/oder eine Mehrzahl an Empfangskanälen zum Erfassen jeweils der an der Füllgutoberfläche reflektierten Sendesignale;
eine Antennenanordnung (1130) mit einer Mehrzahl an Sendeelementen (109 - 112) und einer Mehrzahl an Empfangselementen (113 - 119);
wobei das Radarfüllstandmessgerät mehr Sendekanäle aufweist als Sendeelemente und/oder mehr Empfangskanäle als Empfangselemente;
und wobei das Radarfüllstandmessgerät eine Steuerschaltung (106) aufweist, die zur Aktivierung eines von zwei oder mehr Betriebszuständen des Radarfüllstandmessgeräts eingerichtet ist;
wobei in den beiden Betriebszuständen jeweils eine andere Anzahl an Sendekanälen und/oder Empfangskanälen verwendet wird.

2. Radarfüllstandmessgerät (101) nach Anspruch 1, eingerichtet, weniger Sendeelemente zur Füllstandmessung zu verwenden als Sendekanäle vorgesehen sind und/oder weniger Empfangselemente zur Füllstandmessung zu verwenden als Empfangskanäle vorgesehen sind.

3. Radarfüllstandmessgerät (101) nach Anspruch 1 oder 2,
wobei die Anordnung (102, 103, 202) mit einem oder mehreren Radarchips (102, 103) eine Mehrzahl an Radarchips aufweist.

4. Radarfüllstandmessgerät (101) nach einem der vorhergehenden Ansprüche,
wobei die Anordnung (102, 103, 202) mit einem oder mehreren Radarchips (102, 103) einen Radarchip (102) aufweist, der zum Senden und zum Empfangen von Sendesignalen eingerichtet ist, und einen integrierten Mikrowellenschaltkreis (202), der nur zum Senden von Sendesignalen oder nur zum Empfangen von an der Füllgutoberfläche reflektierten Sendesignalen eingerichtet ist.

5. Radarfüllstandmessgerät (101) nach einem der vorhergehenden Ansprüche,
wobei die Steuerschaltung (106) eingerichtet ist, einen der mehreren Betriebszustände in Abhängigkeit vom Füllstand zu aktivieren und zu deaktivieren.

6. Radarfüllstandmessgerät (101) nach einem der vorhergehenden Ansprüche,
wobei die Steuerschaltung (106) eingerichtet ist, ein Bauteil der Anordnung (102, 103, 202) mit einem oder mehreren Radarchips (102, 103) für die Füllstandmessung zu deaktivieren.

7. Radarfüllstandmessgerät (101) nach einem der vorhergehenden Ansprüche,
wobei auf einem Radarchip (102) ein Analog / Digitalwandler integriert ist.

8. Radarfüllstandmessgerät (101) nach einem der vorhergehenden Ansprüche, eingerichtet zur Erfassung der Topologie eines Mediums in einem Behälter.

9. Radarfüllstandmessgerät (101) nach einem der vorhergehenden Ansprüche,
wobei das Radarfüllstandmessgerät als FMCW Füllstandmessgerät ausgeführt ist.

## Claims

1. A radar fill level measuring device (101) for fill level measurement or for
capturing a topology of a product surface in a container, comprising:
an arrangement (102, 103, 202) comprising one or more radar chips (102, 103), comprising a plurality of transmission channels for generating a respective transmission signal and/or a plurality of reception channels for capturing the respective transmission signals reflected at the filling material surface;
an antenna arrangement (1130) comprising a plurality of transmitting elements (109-112) and a plurality of receiving elements (113-119);
wherein the radar fill level measuring device has more transmission channels than transmission elements and/or more reception channels than reception elements;
and wherein the radar fill level measuring device comprises a control circuit (106) configured for activating one of two or more operating states of the radar fill level meter measuring device;
wherein in each of the two operating states a different number of transmitting channels and/or receiving channels is used.

2. The radar fill level measuring device (101) according to claim 1, configured to use fewer transmitting elements for fill level measurement than transmitting channels are provided and/or to use fewer receiving elements for fill level measurement than receiving channels are provided.

3. The radar fill level measuring device (101) according to claim 1 or 2,
wherein the assembly (102, 103, 202) comprising one or more radar chips (102, 103) comprises a plurality of radar chips.

4. The radar fill level measuring device (101) according to any of the preceding claims,
wherein the arrangement (102, 103, 202) comprising one or more radar chips (102, 103) comprises a radar chip (102) configured to transmit and receive transmit signals and a microwave integrated circuit (202) configured to transmit only transmitting signals or to receive only transmitting signals reflected from the product surface.

5. The radar fill level measuring device (101) according to any of the preceding claims,
wherein the control circuit (106) is arranged to activate and deactivate, depending on the fill level, one of the plurality of operating states.

6. The radar fill level measuring device (101) according to any of the preceding claims,
wherein the control circuit (106) is configured to deactivate a component of the arrangement (102, 103, 202) comprising one or more radar chips (102, 103) for fill level measurement.

7. The radar fill level measuring device (101) according to any of the preceding claims,
wherein an analog/digital converter is integrated on a radar chip (102).

8. The radar fill level measuring device (101) according to any of the preceding claims, configured to detect the topology of a medium in a container.

9. The radar fill level measuring device (101) according to any of the preceding claims,
wherein the radar fill level measuring device is designed as an FMCW fill level measuring device.

## Revendications

1. Appareil radar de mesure du niveau de remplissage (101) pour capturer un niveau ou une topologie de la surface d'un matériau de remplissage dans un récipient, comprenant:
une arrangement (102, 103, 202) avec une ou plusieurs des puces radar (102, 103), comprenant une pluralité de canaux de transmission pour générer un signal de transmission respectif et/ou une pluralité de canaux de réception pour capturer les signaux de transmission respectifs réfléchis à la surface du matériau de remplissage;
une arrangement d'antennes (1130) avec une pluralité d'éléments d'émission (109-112) et une pluralité d'éléments de réception (113-119);
dans lequel l'appareil radar de mesure du niveau de remplissage possède plus de canaux de transmission que d'éléments de transmission et/ou plus de canaux de réception que d'éléments de réception;
et dans lequel l'appareil radar de mesure du niveau de remplissage comprend un circuit de commande (106) adapté pour activer l'un des deux ou plusieurs états de fonctionnement de l'appareil radar de mesure du niveau de remplissage;
où, dans chacun des deux états de fonctionnement, un nombre différent de canaux de transmission et/ou de réception est utilisé.

2. Appareil radar de mesure du niveau de remplissage (101) selon la revendication 1, adapté pour utiliser moins d'éléments d'émission pour la mesure de niveau de remplissage que les canaux d'émission sont fournis et/ou pour utiliser moins d'éléments de réception pour la mesure de niveau de remplissage que les canaux de réception sont fournis.

3. Appareil radar de mesure du niveau de remplissage (101) selon la revendication 1 ou 2,
dans lequel l'arrangement (102, 103, 202) avec une ou plusieurs puces radar (102, 103) comprend une pluralité de puces radar.

4. Appareil radar de mesure du niveau de remplissage (101) selon l'une des revendications précédentes,
dans lequel l'agencement (102, 103, 202) comprenant une ou plusieurs puces radar (102, 103) comprend une puce radar (102) adaptée pour émettre et recevoir des signaux d'émission et un circuit intégré micro-ondes (202) adapté pour émettre uniquement des signaux d'émission ou pour recevoir uniquement des signaux d'émission réfléchis par la surface du matériau de remplissage.

5. Appareil radar de mesure du niveau de remplissage (101) selon l'une des revendications précédentes,
dans lequel le circuit de commande (106) est adapté pour activer et désactiver, en fonction du niveau, l'un des différents états de fonctionnement.

6. Appareil radar de mesure du niveau de remplissage (101) selon l'une des revendications précédentes,
dans lequel le circuit de commande (106) est agencé pour désactiver un composant de l'agencement (102, 103, 202) avec une ou plusieurs puces radar (102, 103) pour la mesure du niveau de remplissage.

7. Appareil radar de mesure du niveau de remplissage (101) selon l'une des affirmations précédentes,
dans lequel un convertisseur analogique/numérique est intégré sur une puce radar (102).

8. Appareil radar de mesure du niveau de remplissage (101) selon l'une des revendications précédentes, adapté pour capturer la topologie d'un milieu dans un récipient.

9. Appareil radar de mesure de niveau de remplissage (101) selon l'une des revendications précédentes,
dans lequel l'appareil radar de mesure du niveau est conçu comme un dispositif de mesure du niveau d'un FMCW.
